# EUROPÄISCHE PATENTANMELDUNG

(11) **EP 2 636 320 A1**
(43) Veröffentlichungstag der Anmeldung: **11.09.2013**
(21) Anmeldenummer: 13157142.4
(22) Anmeldetag: 28.02.2013
(51) Int. Cl.: A24C 5/34

(54) **Messvorrichtung und Messverfahren zur Bestimmung einer Messgröße an einem Ende eines stabförmigen Produkts der Tabak verarbeitenden Industrie**

(30) Priorität: 07.03.2012 DE 102012203579
(71) Anmelder: HAUNI Maschinenbau AG, 21033 Hamburg (DE)
(72) Erfinder: Voss, Helmut, 24537 Neumünster (DE)
(74) Vertreter: Müller Verweyen

(57) **Zusammenfassung**

Eine Messvorrichtung (10) zur Bestimmung einer Messgröße an einem Ende eines stabförmigen Produkts (50) der Tabak verarbeitenden Industrie mittels eines optischen Sensors (13), der eine Strahlungsquelle (15) zur Beleuchtung der Stirnseite (51) des stabförmigen Produkts (50) und einen Strahlungsdetektor (22) zum Detektieren von der Stirnseite (51) des stabförmigen Produkts (50) reflektierter Strahlung, Erzeugung eines Messsignals und Ausgabe des Messsignals an eine Signalverarbeitungseinrichtung (24) umfasst, zeichnet sich dadurch aus, dass der Sensor (13) ein optischer Wegmesssensor ist, der zur Überstreichung der gesamten zu untersuchenden Stirnfläche (51) des stabförmigen Produkts (50) eingerichtet ist, so dass das von dem Sensor (13) ausgegebene Messsignal die Ermittlung eines quantitativen Oberflächenprofils der gesamten Stirnfläche (51) des stabförmigen Produkts (50) ermöglicht.

## Beschreibung

Die Erfindung betrifft eine Messvorrichtung zur Bestimmung einer Messgröße an einem Ende eines stabförmigen Produkts der Tabak verarbeitenden Industrie mittels eines optischen Sensors, der eine Strahlungsquelle zur Beleuchtung der Stirnseite des stabförmigen Produkts und einen Strahlungsdetektor zum Detektieren von der Stirnseite des stabförmigen Produkts reflektierter Strahlung, Erzeugung eines Messsignals und Ausgabe des Messsignals an eine Signalverarbeitungseinrichtung umfasst. Die Erfindung betrifft weiterhin ein entsprechendes Messverfahren.

Die DE 36 18 190 A1 offenbart eine Vorrichtung zur optischen Prüfung der Enden von stabförmigen Tabakartikeln mit einem auf die Stirnseite der stabförmigen Tabakartikel gerichteten Lichtleiterfasernbündel, dessen abgewandte Enden einem Lichtsender sowie einem Lichtempfänger zugeordnet sind. Der Lichtempfänger ist mit einer Auswerteschaltung verknüpft, der die Intensität des von der Stirnseite des Tabakartikels reflektierten Lichts für jede einzelne Zigarette aufintegriert. Die integrierte Intensität des reflektierten Lichts ist ein Maß für den Zustand bzw. die Dichte des Zigarettenendes und kann zum Auswurf als fehlerhaft erkannter Zigaretten verwendet werden. Eine ähnliche Prüfvorrichtung ist aus der EP 0 843 974 B1 bekannt.

Die DE 38 22 520 C2 offenbart eine Vorrichtung zur Überprüfung der Enden von Zigaretten, wobei ein Sender einen Lichtstrahl unter einem spitzen Winkel auf das zu untersuchende Stirnende der Zigarette richtet, so dass bei fehlendem Tabak am Zigarettenende der an der Innenseite des Zigarettenpapiers reflektierte Lichtstrahl von einem Empfänger aufnehmbar ist. Der Sensor erzeugt dann ein entsprechendes Fehlersignal, das zum Ausstoß fehlerhafter Zigaretten führt.

Die EP 0 585 686 B1 offenbart eine optische Vorrichtung zur Überprüfung der Füllung von Zigaretten, die eine die Stirnfläche einer Zigarette beleuchtende Lichtquelle, eine fokussierende Linse mit festem Fokus und einen Detektor aufweist. Die Fokusebene der Linse ist auf eine Endkante der Zigarette gerichtet. Der Sensor ist zur Ermittlung des Kontrastes des von der Linse auf den Sensor fokussierten Bildes der Zigarettenstirnfläche eingerichtet. Bei optimal gefüllter Zigarette ist der detektierte Kontrast maximal. Wenn das Kontrastsignal unter eine vorbestimmte Schwelle fällt, wird ein Ausschusssignal ausgegeben. Eine ähnliche Prüfvorrichtung dieser Art ist aus der EP 0 630 586 B2 bekannt.

Aus der EP 1 099 388 A2 ist ein Off-Line-Prüfapparat zum Detektieren des Vorhandenseins von Tabak am Brandende einer Zigarette auf der Grundlage einer Infrarot-Transmissionsmessung bekannt. Auf einer Trommel werden Zigaretten an einer Tabakdetektionseinrichtung mit einer Infrarotquelle vorbeigeführt, die einen axial in die Zigarette an deren Brandende gerichteten Infrarotstrahl emittiert. Die radial aus der Zigarette austretende Infrarotstrahlung wird von vier um den Umfang der Zigarette angeordneten Infrarotdetektoren aufgenommen. Sofern die Intensität der durch das Brandende der Zigarette transmittierten Infrarotstrahlung einen voreingestellten Schwellwert nicht überschreitet, wird die Zigarette als akzeptabel eingestuft.

Sämtliche der vorstehend beschriebenen Messvorrichtungen beruhen auf einer Messung der Intensität der von der Stirnseite des stabförmigen Produkts reflektierten oder durch die Stirnseite des stabförmigen Produkts durchtretenden Strahlung. Diese Verfahren sind ungenau und liefern keine differenzierten quantitativen Werte, sondern nur eine binäre Aussage dahingehend, ob das untersuchte Produkt den Qualitätsanforderungen genügt oder nicht.

Gemäß der EP 1 053 942 B1 wird der Lichtstrahl eines Lasers über eine Linse aufgeweitet und mittels einer Blende ein strukturiertes flächiges Lichtmuster erzeugt, das auf einen Zigarettenkopf fokussiert wird. Eine Linse fokussiert das reflektierte Licht auf einen positionsempfindlichen Detektor. Vom Detektor empfangenes reflektiertes Licht ist in einem von Null verschiedenen Winkel zum bestrahlenden Licht angeordnet. Die Blende umfasst eine größere Öffnung zur Ausleuchtung eines zentralen Bereichs einer Stirnfläche eines Zigarettenkopfs und einen konzentrisch um die größere Öffnung angeordneten Kranz von kleineren Öffnungen zum Beleuchten der Stirnseite des Zigarettenpapiers. Aus einer Verschiebung des von der größeren Öffnung erzeugten Lichtflecks auf dem Detektor relativ zu dem Kranz aus von der kleineren Öffnungen erzeugten Lichtpunkten kann beispielsweise auf eine fehlende Tabakfüllung am Zigarettenkopf geschlossen werden, was zum Auswurf der Zigarette führt. Bei einem Formatwechsel muss je nach Zigarettendurchmesser die Blende ausgewechselt werden, was umständlich und fehleranfällig ist. Zudem kann schon eine geringe Fehlpositionierung des eingestrahlten Lichtmusters relativ zu dem Zigarettenkopf zu einem falschen Messergebnis führen, was entweder den Ausschuss fehlerfreier Zigaretten oder die Akzeptanz fehlerhafter Zigaretten bedeutet.

Eine ähnliche Prüfvorrichtung ist aus der EP 1 176 092 B1 bekannt. Hier wird jeder Zigarettenkopf mit einem aus drei überlagerten Kreisen gebildeten, die zu untersuchende Stirnfläche teilweise ausleuchtenden Lichtmuster bestrahlt. Zusätzlich zu der erforderlichen genauen Positionierung der ebenfalls vorgesehenen Blende relativ zu den Zigarettenköpfen ist hier noch eine Mehrzahl von Einzellichtquellen zur Erzeugung des Lichtmusters vorgesehen, die sowohl relativ zueinander als auch relativ zu der Blende exakt positioniert sein müssen, um ein fehlerfreies Messergebnis zu erhalten. Die Erzeugung des Lichtmusters in jeder einer Zigarette entsprechenden Blendenöffnung ist zudem äußerst aufwändig.

Die Aufgabe der Erfindung besteht darin, eine Messvorrichtung und ein Messverfahren anzugeben, die mit geringem Aufwand genaue quantitative Werte bereitstellen, um detaillierte Aussagen über die Produktqualität zu ermöglichen.

Die Erfindung löst diese Aufgabe mit den Merkmalen der unabhängigen Ansprüche. Die Verwendung eines auf Triangulation beruhenden Wegmesssensors ermöglicht die quantitative Ermittlung von Abständen der gemessenen Stirnfläche in axialer Richtung. Erfindungsgemäß ist der Sensor zur Überstreichung der gesamten zu untersuchenden Stirnfläche des stabförmigen Produkts eingerichtet. Auf diese Weise kann ein quantitatives Oberflächenprofil der gesamten Stirnfläche des stabförmigen Produkts mit einer Vielzahl von Datenpunkten erhalten werden, was äußerst detaillierte Aussagen über die Produktqualität ermöglicht. Vorzugsweise wird aus dem Messsignal ein von der abgetasteten Stirnseite begrenztes Kopfausfallvolumens quantitativ ermittelt. Das Kopfausfallvolumen, das beispielsweise ein wichtiges Qualitätsmerkmal von Zigaretten ist, bezeichnet dabei das Leervolumen zwischen der durch die Kante des Umhüllungsstreifens definierten Sollebene und der von dem umhüllten Tabakmaterial gebildeten Stirnfläche. Aufgrund des erfindungsgemäß bestimmbaren detaillierten Oberflächenprofils der zu untersuchenden Stirnfläche ist die Bestimmung des Kopfausfallvolumens erfindungsgemäß mit höchster Genauigkeit möglicht, die um Größenordnungen über den bisher verfügbaren Messgenauigkeiten liegt.

Die Erfindung ist aber nicht auf die beschriebene Anwendung beschränkt. Alternativ oder zusätzlich kann beispielsweise die Ermittlung einer geometrischen Eigenschaft eines Umhüllungsstreifens des stabförmigen Produkts, und damit einer geometrischen Eigenschaft des stabförmigen Produkts selbst, aus dem Messsignal vorgesehen sein. Solche geometrischen Eigenschaften sind beispielsweise der mittlere Durchmesser bzw. Umfang des Umhüllungsstreifens und/oder die Exzentrizität des Umhüllungsstreifens.

In einer bevorzugten Ausführungsform ist der Sensor ein zweidimensionaler optischer Wegmesssensor, wobei die Strahlungsquelle zur Erzeugung eines Strahlungsfächers eingerichtet ist, um eine linienförmige Abtastung der Stirnfläche des stabförmigen Produkts durchzuführen, und wobei zur flächigen Abtastung der Stirnfläche des stabförmige Produkts der Wegmesssensor und die Stirnseite des stabförmigen Produkts relativ zueinander bewegbar sind. Mittels eines zweidimensionalen optischen Wegmesssensors kann die Messdauer pro stabförmigem Produkt, und damit die Gesamtmessdauer, erheblich reduziert werden. In dieser Ausführungsform ist die Ausdehnung bzw. Breite des Strahlungsfächers am Ort der zu untersuchenden Stirnfläche vorzugsweise größer ist als der größte Durchmesser der zu untersuchenden Stirnfläche, so dass zur vollständigen Überstreichung der Stirnfläche eine Bewegung des Sensors relativ zu der Stirnfläche in einer Richtung ausreichend ist.

In einer anderen Ausführungsform ist der Sensor ein eindimensionaler optischer Wegmesssensor, wobei die Strahlungsquelle zur Erzeugung eines Lichtstrahls eingerichtet ist, um eine punktförmige Abtastung der Stirnfläche des stabförmigen Produkts durchzuführen, und wobei zur flächigen Abtastung der Stirnfläche des stabförmige Produkts der Wegmesssensor und die Stirnseite des stabförmigen Produkts in zwei zueinander senkrechten Richtungen relativ zueinander bewegbar sind. Diese Ausführungsform kann beispielsweise unter Kostengesichtspunkten bevorzugt sein. Im Allgemeinen ist daher der Sensor vorzugsweise ein ein- oder zweidimensionaler optischer Wegmesssensor, wobei zur flächigen Abtastung der Stirnfläche des stabförmigen Produkts der Wegmesssensor und die Stirnseite des stabförmigen Produkts relativ zueinander bewegbar sind.

Vorzugsweise umfasst die Messvorrichtung einen Manipulator zur Handhabung des stabförmigen Produkts, der insbesondere zur Ausübung einer Schüttel- und/oder Stoßbewegung auf das stabförmige Produkt eingerichtet ist. In diesem Fall können an jedem stabförmigen Produkt vorteilhaft zwei Messungen durchgeführt werden, nämlich eine Messung vor und eine Messung nach Beaufschlagung des Produkts mit der Schüttel- und/oder Stoßbewegung. Aus diesen beiden unabhängigen Messungen lassen sich zusätzliche Qualitätsinformationen des untersuchten Produkts ableiten.

Messverfahren zur Bestimmung einer Messgröße an einem Ende eines stabförmigen Produkts der Tabak verarbeitenden Industrie, umfassend das Erzeugen eines Messsignals mittels eines optischen Sensors und Ausgeben des Messsignals an eine Signalverarbeitungseinrichtung zur Ermittlung der Messgröße aus dem Messsignal, gekennzeichnet durch die Verwendung eines optischen, auf einem Triangulationsverfahren beruhenden Wegmesssensors, der die Stirnfläche des Tabakprodukts abtastet und ein Messsignal, das die Ermittlung eines quantitativen Oberflächenprofils der Stirnfläche des stabförmigen Produkts ermöglicht, ausgibt.

Die Erfindung wird im Folgenden anhand bevorzugter Ausführungsformen unter Bezugnahme auf die beigefügten Figuren erläutert. Dabei zeigt bzw. zeigen:
- Fig. 1: eine perspektivische Ansicht einer in einem Modul angeordneten Messvorrichtung in der Messposition;
- Fig. 2: eine schematische Ansicht eines optischen Sensors der Messvorrichtung;
- Fig. 3 bis 6:: perspektivische Ansichten der Messvorrichtung aus Fig. 1 zur Erläuterung eines Messablaufs;
- Fig. 7, 8:: Draufsichten auf die zu untersuchenden Stirnseite des Produkts zur Illustration des Abtastvorgangs für einen zwei- bzw. eindimensionalen Wegmesssensor;
- Fig. 9, 10:: schematische Messdiagramme vor und nach Vibrationsbeaufschlagung des stabförmigen Produkts;
- Fig. 11, 12:: Foto (links) und gemessenes Flächenprofil (rechts) der Stirnseite einer Zigarette vor und nach Vibrationsbeaufschlagung des stabförmigen Produkts; und
- Fig. 13: eine schematische Ansicht einer Labor-Messstation zur Messung unterschiedlicher Eigenschaften von stabförmigen Produkten.

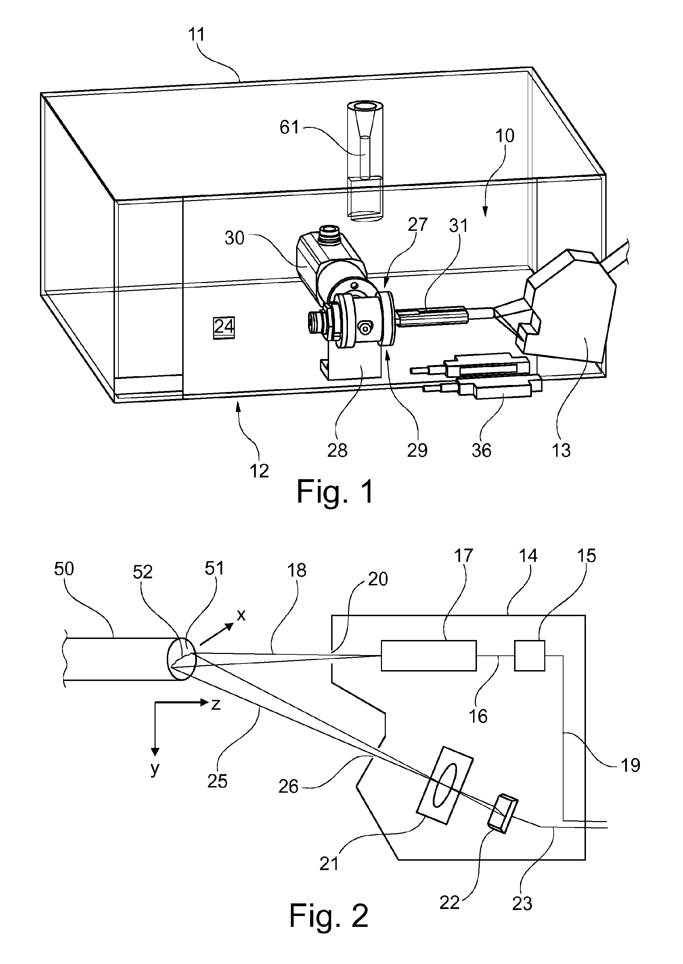

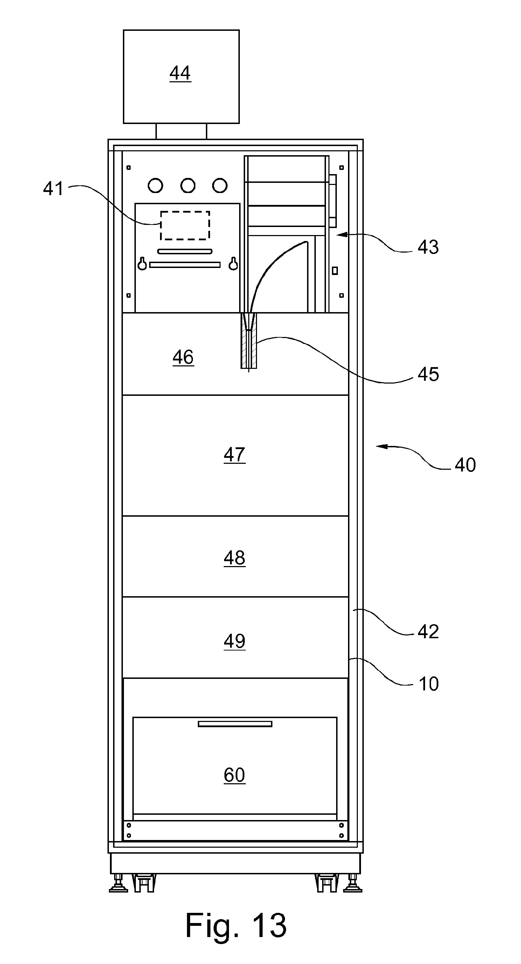

Die in Fig. 1 gezeigte Messvorrichtung 10 ist in einem Gehäuse 11 eines vorzugsweise modulartigen Einschubs 12 angeordnet. Dies ermöglicht eine bevorzugte Anwendung in einer Labor-Messstation 40, die im Folgenden anhand von Fig. 13 erläutert wird.

Die Messstation 40 ist in einem Rack 42 aufgebaut und umfasst einen Ladebereich 43 für eine Mehrzahl zu untersuchender stabförmige Produkte der Tabak verarbeitenden Industrie, insbesondere Zigaretten oder Filterstöcke, eine Mehrzahl von modularen, voneinander unabhängigen Mess- bzw. Testvorrichtungen 46 bis 49 zum Messen unterschiedlicher Qualitätseigenschaften der stabförmigen Produkte, beispielsweise Gewicht, Druckverlust, Ventilation, Feuchte, Durchmesser bzw. Umfang, Länge, Härte, und einen Sammelbehälter 60 zum Aufnehmen untersuchter stabförmiger Produkte. Die Messstation 40 umfasst des Weiteren eine elektronische Signalverarbeitungs- und Steuereinrichtung 41 und ein Bedienterminal 44, beispielsweise einen berührungsempfindlichen Bildschirm. Die Mess- bzw. Testvorrichtungen 46 bis 49 sind mit der Signalverarbeitungs- und Steuereinrichtung 41 insbesondere über einen Datenbus verbunden. Am unteren Ende des Ladebereichs 43 ist eine vertikal angeordnete Röhre 45 vorgesehen, durch die die zu untersuchenden stabförmigen Produkte vereinzelt werden und in das oberste Testmodul 46 gelangen. Zwischen den Testmodulen 46 bis 49 sind jeweils ähnliche Röhren 61 vorgesehen, siehe beispielsweise Fig. 1, so dass ein zu untersuchendes stabförmiges Produkt von oben nach unten sämtliche Messmodule 46 bis 49 durchläuft. Eine derartige Messstation 40 wird daher auch als Drop-Through-Station bezeichnet.

Die erfindungsgemäße Messvorrichtung 10 führt in der Regel zu einer Beschädigung der untersuchten Produkte, wie im Folgenden noch beschrieben wird, und bildet daher vorzugsweise das letzte bzw. unterste Testmodul 49 in der Messstation 40.

Die erfindungsgemäße Messvorrichtung 10 gemäß Fig. 1 umfasst einen Manipulator 27 zur Handhabung eines zu untersuchenden stabförmigen Produkts und einen optischen Wegmess-Sensor 13. Im Hinblick auf die modulare Bauweise umfasst die Messvorrichtung 10 vorzugsweise eine von der Signalverarbeitungs- und Steuereinrichtung 41 der Messstation 40 unabhängige eigene Signalverarbeitungseinrichtung- und Steuereinrichtung 24 zur Steuerung der Messvorrichtung 10 und zur Auswertung der von dem Sensor 13 aufgenommenen Messsignale. Manipulator 27, Sensor 13 und Signalverarbeitungseinrichtung- und Steuereinrichtung 24 sind zweckmäßigerweise vollständig in dem Gehäuse 11 angeordnet.

Der Aufbau des Sensors 13 ist schematisch in Fig. 2 gezeigt. In dem Sensorgehäuse 14 ist eine einen Lichtstrahl 16 erzeugende, über eine Leitung 19 versorgte Lichtquelle 15 vorgesehen. Die Lichtquelle 15 ist vorzugsweise eine Laserlichtquelle, insbesondere ein Halbleiterlaser, beispielsweise eine Laserdiode. Vorzugsweise enthält der Sensor 13 des Weiteren ein Strahlaufweitungselement 17, insbesondere eine zylindrische Linse, zur Aufweitung des Lichtstrahls 16 in einen zweidimensionalen Lichtfächer 18. Der Lichtfächer 18 kann auch auf andere Weise erzeugt werden.

In der in Fig. 1 gezeigten Manipulatorposition (Messposition gemäß Fig. 2) tritt der Lichtfächer 18 durch ein Austrittsfenster 20 aus dem Sensor 13 aus und fällt auf die zu vermessende Oberfläche, hier die Stirnseite 51 am Kopfende einer Zigarette 50, und erzeugte dort eine Linie 52, nämlich die Schnittlinie der Ebene des Strahlfächers 18 mit der zu vermessenden Oberfläche 51. Das von der Oberfläche 51 reflektierte Licht wird sodann über ein in dem Gehäuse 14 vorgesehenes Eintrittsfenster 26 mittels eines in dem Sensor 13 enthaltenden, insbesondere zweidimensionalen Linsensystems bzw. Objektivs 21 auf dem Strahlungsdetektor 22 abgebildet, der insbesondere als zweidimensionaler Detektor bzw. Flächendetektor ausgebildet ist. Die mittels des Strahlungsdetektors 22 detektierte Bildinformation wird über eine Signalleitung 23 an die in Fig. 1 nur schematisch gezeigte Signalverarbeitungseinrichtung- und Steuereinrichtung 24 ausgegeben.

Aufgrund des Winkels zwischen der einfallenden Strahlung (Strahlungsfächer 18) und der reflektierten Strahlung 25 kann der genaue longitudinale Abstand jedes Punktes auf der Linie 52 zu einem entsprechenden Referenzpunkt, und damit das genaue Profil der Linie 52 mittels Triangulation quantitativ bestimmt werden. Longitudinal bedeutet dabei entlang der Richtung der einfallenden Strahlung 18 (hier die z-Richtung), genauer entlang der Richtung der Mittelachse der einfallenden Strahlung 18. Auf dem Strahlungsdetektor 22 wird daher die Form der Linie 52, und damit das Oberflächenprofil der Oberfläche 51 in dem betreffenden Querschnitt, in quantitativer Weise abgebildet.

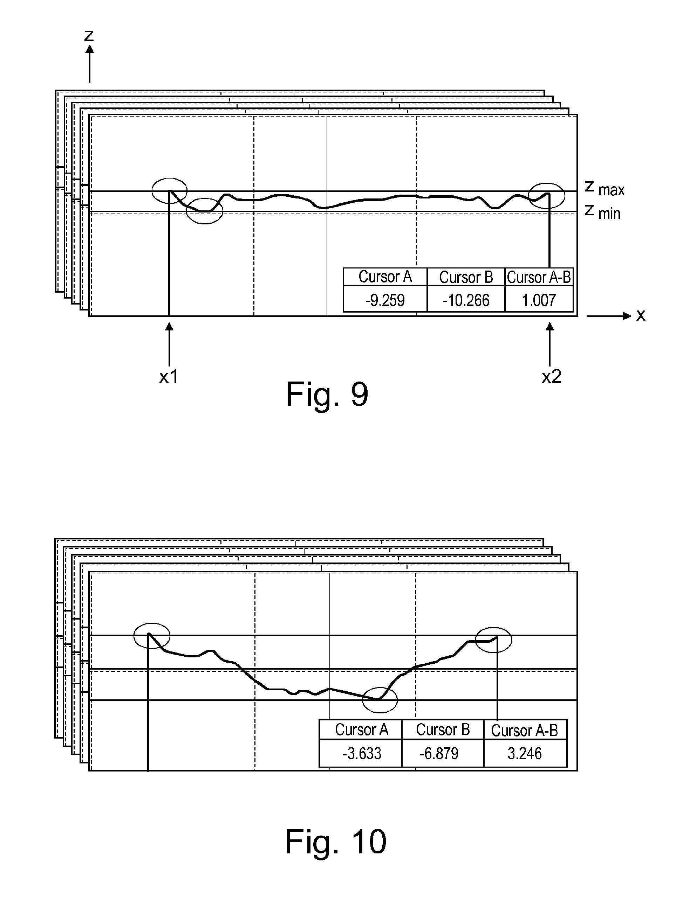

Der Sensor 13 ist vorzugsweise zur Erzielung einer Ortsauflösung von 0.2 mm oder darunter, vorzugsweise von 0.1 mm oder darunter, eingerichtet, so dass pro Messkurve (siehe Fig. 9) vorzugsweise mindestens 50, weiter vorzugsweise mindestens 100 Messpunkte zur Verfügung stehen. Ortsauflösungen deutlich unterhalb von 0.1 mm mit mehreren hundert Messpunkten pro Messkurve sind bei Bedarf problemlos erzielbar.

Der Winkel zwischen der einfallenden Strahlung (Strahlungsfächer 18) und der reflektierten Strahlung 25 liegt im Allgemeinen zwischen 10° und 80° und zur Erzielung einer höheren Genauigkeit vorzugsweise zwischen 20° und 80°, weiter vorzugsweise zwischen 30° und 70° und noch weiter vorzugsweise zwischen 40° und 60°.

Der Manipulator 27 umfasst einen gehäusefesten Träger 28, an dem eine mittels eines Schwenkantriebs 30 um eine horizontale Achse schwenkbarer Halteeinrichtung 29 schwenkbar angeordnet ist. Die Halteeinrichtung 29 umfasst einen Greifer 31, mit dem ein stabförmiges Produkt 50 gegriffen und unverlierbar gehalten werden kann. Der Greifer 31 kann beispielsweise wie in Fig. 1 gezeigt zwei mit Längsausnehmungen versehene Backen aufweisen, zwischen denen das zu untersuchende stabförmige Produkt 50 eingespannt ist und die zu diesem Zweck relativ zueinander verstellbar sein können. Andere Arten von Greifer sind selbstverständlich möglich.

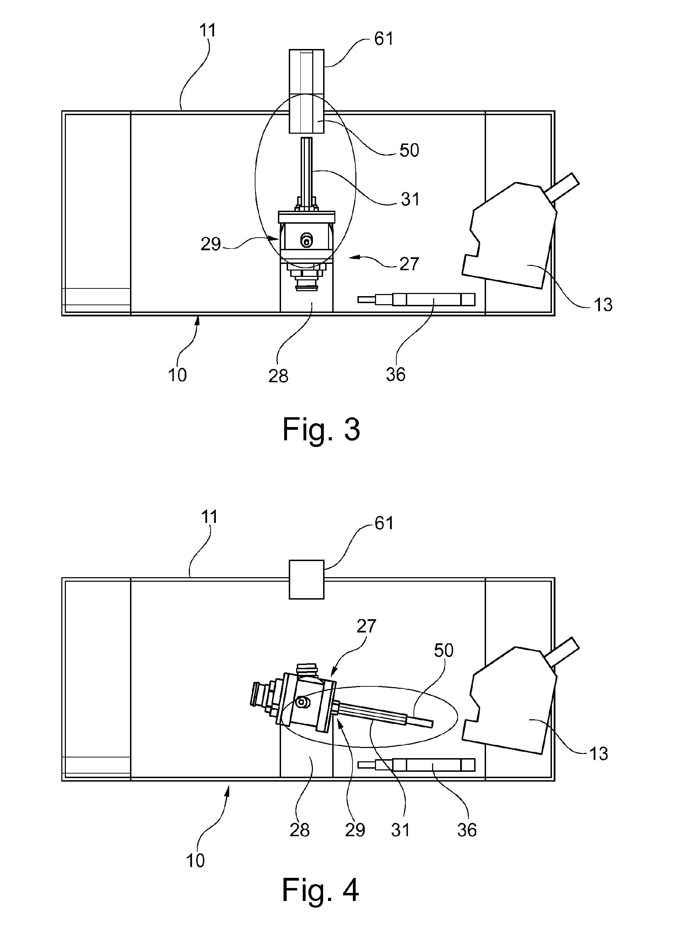

Im Folgenden wird der Ablauf einer Messung einer Zigarette in der erfindungsgemäßen Messvorrichtung 10 anhand der Fig. 3 bis 6 und Fig. 1 beispielhaft erläutert.

Zu Beginn der Messung wird die Halteeinrichtung 29 mittels des Schwenkantriebs 30 in die in Fig. 3 gezeigte vertikale Position geschwenkt. Eine durch die Röhre 61 eingeführte Zigarette wird von dem Greifer 31 aufgenommen und festgespannt. Sodann wird die Halteeinrichtung 29 um 90° in die in Fig. 1 gezeigte Messposition geschwenkt, wobei die Stirnseite 51 am Kopfende der Zigarette 50 dem Sensor 13 präsentiert wird. Der Schwenkbereich des Manipulators beträgt demnach vorzugsweise mindestens 90°.

Zur Durchführung der eigentlichen Messung wird der Sensor 13 in Betrieb genommen und die Stirnseite 51 am Kopfende der Zigarette 50 wird vollständig abgetastet. Zu diesem Zweck werden die Zigarette 50 und der Sensor 13 relativ zueinander in einer Richtung senkrecht zu dem Strahlfächer 18, hier beispielsweise in vertikaler Richtung, bewegt, damit der Strahlfächer 18 bzw. die Linie 52 die gesamte Stirnseite 51 der Zigarette vollständig überstreicht. Die Relativbewegung zwischen Zigarette 50 und Sensor 13 während der Messung kann vorzugsweise durch die Schwenkung der Halteeinrichtung 29 mittels des Schwenkantriebs 30 bewirkt werden. Alternativ ist beispielsweise auch eine vertikale Verschiebung der Halteeinrichtung 29, oder eine Schwenkung oder Verschiebung des Sensors 13 möglich. Nach jedem Schritt der zuvor geschilderten Relativbewegung zwischen Zigarette 50 und Sensor 13 wird eine Messkurve wie die beispielsweise in Fig. 9 gezeigte aufgenommen.

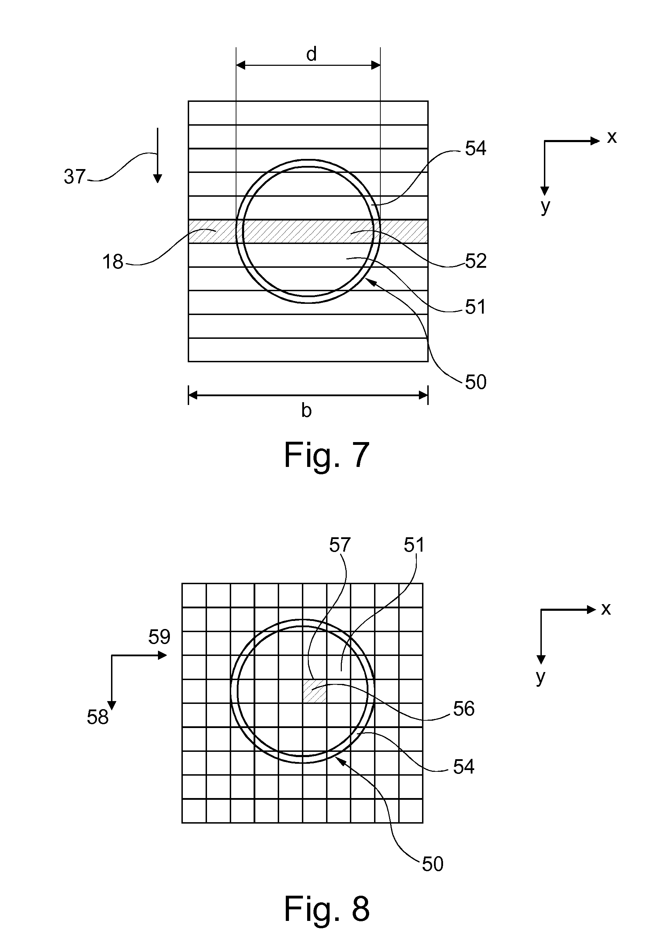

Die Abtastbewegung wird im Folgenden anhand der Fig. 7 genauer erläutert. Fig. 7 betrifft Ausführungsformen mit einem zweidimensionalen Wegmesssensor 13 mit einem Lichtfächer 18 wie in den Fig. 1 und 2 gezeigt. In Fig. 7 ist der Lichtfächer 18 im Querschnitt am Ort der zu untersuchenden Stirnfläche 51 durch ein schraffiertes Rechteck illustriert. Die Ausdehnung b des Lichtfächers 18 am Ort der zu untersuchenden Stirnfläche 51 (siehe Fig. 7) ist vorteilhaft größer als der maximale Durchmesser d des zu untersuchenden Produkts, insbesondere größer als 10 mm, weiter vorzugsweise größer als 15 mm. Es reicht dann aus, wenn die zu untersuchende Stirnfläche 51 des Produkts 50 in einer Abtastrichtung 37 relativ zu dem Lichtfächer 18 bewegt wird, um die zu untersuchende Stirnfläche 51 einschließlich der Kante 54 des Umhüllungsstreifens vollständig zu überstreichen. In Fig. 7 sind zu diesem Zweck 11 Abtastpositionen gezeigt, wobei an jeder Abtastposition eine Messkurve aufgezeichnet wird. In der Praxis ist die Zahl der Abtastpositionen pro Produkt 50 je nach gewünschter Messauflösung in der Regel wesentlich höher. Nach dem zuvor Gesagten ist der Sensor 13 zum Überstreichen der gesamten Kante 54 des Umhüllungsstreifens 55 eingerichtet. Die Abtastpositionen können sich auch überlappen.

Im Vordergrund der Fig. 9 ist ein Messdiagramm zu sehen, das die auf dem Strahlungsdetektor 22 detektierte Linie 52 in der z-Richtung über der x-Richtung (siehe Fig. 2) bei fester y-Position wiedergibt (entsprechend einer Abtastposition in Fig. 7). Aufgrund der geometrischen Bedingungen gibt die unregelmäßige Kurve in Fig. 9 das Oberflächenprofil der Oberfläche 51 in dem der Linie 52 entsprechen Querschnitt quantitativ exakt wieder (Triangulation). Die Werte am rechten und linken Rand der unregelmäßigen Kurve in Fig. 9 an den mit x1 und x2 bezeichneten Positionen entsprechen der Papierkante 54 bzw. allgemeiner der Kante des Hüllmaterials des stabförmigen Produkts 50. An diesen Positionen erreicht die Messkurve in der Regel den Maximalwert zmax. Im Beispiel der Fig. 9 weicht der Minimalwert zmin der Messkurve nur wenig von dem Maximalwert zmax ab, was eine im Wesentlichen intakte Tabakfüllung am Kopfende der Zigarette 50 anzeigt.

Die Halteeinrichtung 29 wird dann, wie zuvor beschrieben, relativ zu dem Sensor 13 schrittweise verschwenkt und nach jedem Schwenkschritt wird eine separate Messkurve aufgenommen (jeweils entsprechend einer Abtastposition in Fig. 7). Dies wird in Fig. 9 durch fünf übereinandergelegte Messdiagrammen veranschaulicht, wobei in der Praxis die Zahl der pro Zigarette aufgenommenen Messkurven in der Regel wesentlich bzw. um ein Vielfaches höher ist, um eine gewünschte hohe Messauflösung in der y-Richtung zu erzielen. Die Zahl der pro Zigarette aufgenommenen Messkurven (Zahl der Diagramme in Fig. 9) ist vorzugsweise so bemessen, dass sich eine einheitliche gewünschte Messauflösung in beiden Richtungen (x- und y-Richtung in Fig. 2) ergibt. Die Zahl der pro Zigarette aufgenommenen Messkurven beträgt daher vorzugsweise mindestens 50, weiter vorzugsweise mindestens 100.

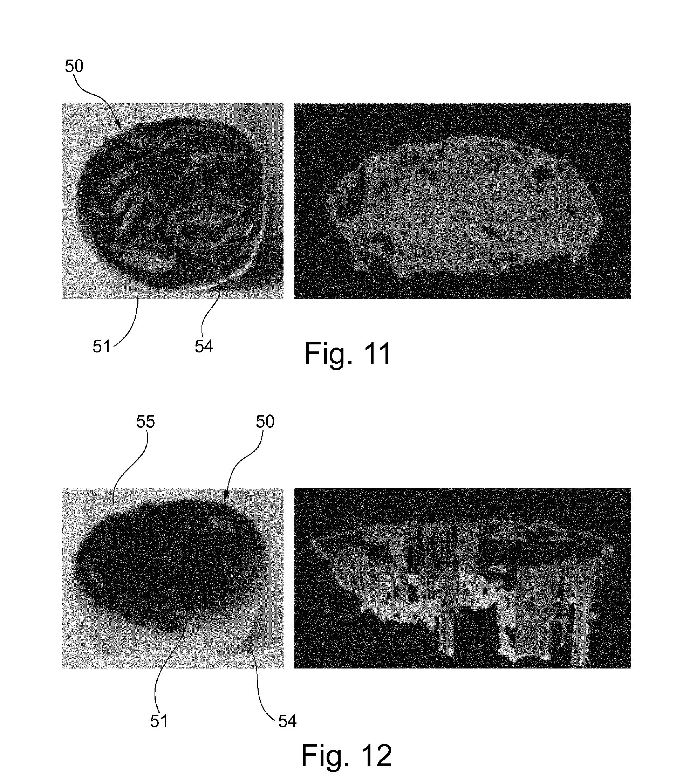

Auf die beschriebene Weise ergibt sich ein hochaufgelöstes, dreidimensionales Flächenprofil der gesamten stirnseitigen Oberfläche 51 der Zigarette. Beispielsweise ist auf der rechten Seite von Fig. 11 ein gemessenes Flächenprofil des in derselben Figur auf der linken Seite gezeigten, im Wesentlichen intakten Zigarettenkopfes in einer perspektivischen Ansicht gezeigt. Flächenprofil bedeutet, dass für jeden Messwert in x-und y-Richtung der gemessene relative Abstand der Oberfläche 51 in longitudinaler Richtung (z-Wert) angegeben wird. Aufgrund der Erfindung steht somit eine äußerst detaillierte, quantitative Oberflächeninformation mit beispielsweise 10^3 bis 10^6 oder mehr Datenpunkten pro Messung zur Verfügung. Im Vergleich dazu stellt der Stand der Technik beispielsweise gemäß EP 1 053 942 B1 lediglich einen einzigen Messwert zur Verfügung (dies wäre eine kreisrunde flache Scheibe in Fig. 11, rechte Seite), der dann gegen einen Schwellwert diskriminiert wird, um lediglich eine binäre Aussage (fehlerhaft / nicht fehlerhaft) zu erhalten.

Das in Fig. 11, rechte Seite gezeigte hochaufgelöste Flächenprofil kann vorzugsweise zur hochgenauen quantitativen Bestimmung des Kopfausfalls verwendet werden. Zur quantitative Bestimmung des Kopfausfallvolumens wird der Abstand sämtlicher z-Werte insbesondere zu dem z-Wert der Papierkante 54 (zmax, siehe Fig. 9) aufaddiert. Der so erhaltene Messwert des Kopfausfallvolumens ist äußerst genau im Gegensatz zu herkömmlichen Messvorrichtungen. Die Verwendung der longitudinalen Position (z-Wert) der Papierkante 54 als Referenzwert erlaubt ein besonders genaues Ergebnis. Ein weiterer Qualitätswert ist die maximale Tiefe des Kopfausfalls, die sich aus der Differenz zwischen zmax und zmin (siehe Fig. 9) beispielsweise in Millimetern ergibt. In der beschriebenen Anwendung kann die Messvorrichtung 10 demnach eine Vorrichtung zur Bestimmung des Kopfausfalls an der Kopfseite von Zigaretten sein.

In einer alternativen oder zusätzlichen Anwendung können geometrische Größen, beispielsweise der Durchmesser bzw. der Umfang des Umhüllungsstreifens bzw. der Zigarette am Zigarettenkopf und/oder deren Exzentrizität (Ovalität) bestimmt werden. Der Umfang der Zigarette ergibt sich beispielsweise aus dem Außenumfang der gemessenen Papierkante 54 (siehe Fig. 11 rechts) in einer Draufsicht auf die Stirnseite 51. In dieser Anwendung kann die Messvorrichtung 10 gegebenenfalls entsprechende herkömmliche Messmodule zur Bestimmung geometrischer Größen der Produkte in der Messstation 40 ersetzen.

Selbstverständlich ist eine Kombination der zuvor beschriebenen Anwendungen (Messung des Kopfausfalls und Messung geometrischer Größen des Umhüllungsstreifens 55) denkbar. Die Erfindung ist nicht auf die geschilderten Anwendungen beschränkt.

In einer bevorzugten Ausführungsform wird die Zigarette 50 nach der zuvor beschriebenen Messung mit einer Schüttel-und/oder Schlagbewegung beaufschlagt. Zu diesem Zweck wird die Zigarette 50 mittels der Halteeinrichtung in eine in Fig. 4 gezeigte, gegen die Horizontale nach unten geneigte Position geschwenkt. Die Neigung liegt vorzugsweise im Bereich von 5° bis 45° und beträgt beispielsweise 10°. Es sind aber auch stärkere Neigungen zwischen 45° und 90° denkbar.

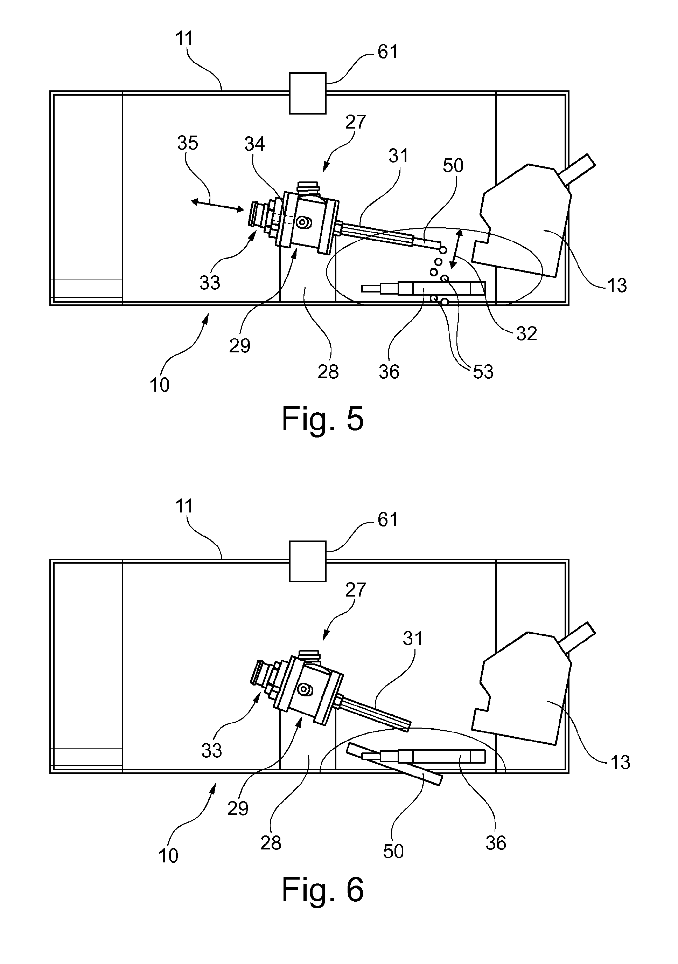

In dieser Position wird die Zigarette 50 wie in Fig. 5 gezeigt geschüttelt und/oder gestoßen. Zu diesem Zweck ist die Halteeinrichtung 29 vorzugsweise zur Ausübung einer Schüttel-und/oder Schlagbewegung auf die Zigarette 50 eingerichtet. Genauer wird die Zigarette 50 vorzugsweise in einer Richtung geschüttelt, die eine Komponente senkrecht zu ihrer Längsachse aufweist. Dies ist in Fig. 5 durch den Doppelpfeil 32 veranschaulicht. Die Schüttelbewegung kann vorzugsweise mittels des Schwenkantriebs 30 erzeugt werden. Die Schüttelbewegung kann aber auch anders, beispielsweise mittels eines separaten Motors mit Unwucht, erzeugt werden. Die Amplitude der Schüttelbewegung liegt vorzugsweise im Bereich +- 1 mm bis +- 10 mm und beträgt beispielsweise +- 4 mm. Die Frequenz der Schüttelbewegung liegt vorzugsweise im Bereich 2 bis 50 Hz und beträgt beispielsweise 10 Hz. Die Zeitdauer der Schüttelbewegung liegt vorzugsweise im Bereich 1 s bis 20 s und beträgt beispielsweise 4 s.

Vorzugsweise wird die Zigarette 50 einer Stoßbewegung insbesondere in axialer Richtung (Doppelpfeil 35) ausgesetzt. Dies kann beispielsweise mittels eines in Fig. 5 nur unvollständig gezeigten Stoßaktuators 33 erfolgen, der beispielsweise einen auf die Filter-Stirnseite wirkenden axialen Stößel 34 umfasst und der beispielsweise pneumatisch betrieben sein kann. Die Amplitude der axialen Stoßbewegung liegt vorzugsweise im Bereich von 1 mm bis 10 mm und beträgt beispielsweise 3 mm. Die Frequenz der Schüttelbewegung liegt vorzugsweise im Bereich 0.5 bis 10 Hz und beträgt beispielsweise 2 Hz. Die Zahl der Stöße liegt vorzugsweise im Bereich 2 bis 20 und beträgt beispielsweise 8.

Aufgrund der geschilderten Schüttel- und Stoßbewegung fällt eine gewisse Menge Tabak 53 aus dem Kopfende der Zigarette 50 aus. Die Menge des ausfallenden Tabaks kann in einer Ausführungsform mittels einer unterhalb des Kopfendes der Zigarette 50 angeordneten, länglichen Lichtschranke 36 bestimmt werden, die am besten in Fig. 1 erkennbar ist. Der Sender der Lichtschranke 36 kann beispielsweise ein Lichtleiter sein. Die Masse des aufgrund der Schüttel-/Stoßbewegung ausgefallenen Tabaks beispielsweise in mg kann mithilfe eines in der Signalverarbeitungseinrichtung- und Steuereinrichtung 24 gespeicherten Kalibrierzusammenhangs ermittelt werden, der zuvor in einer Kalibriermessung bestimmt wurde.

Nach Abschluss der Schüttel-/Stoßbeaufschlagung wird die Zigarette 50 vorzugsweise erneut in die in Fig. 1 gezeigte Messposition geschwenkt und es wird mittels des Sensors 13 ein weiteres detailliertes Oberflächenprofil der Stirnfläche 51 der Zigarette 50 gemessen. Dieses ist beispielsweise auf der rechten Seite von Fig. 12 für den auf der linken Seite von Fig. 12 gezeigten Zigarettenkopf gezeigt. Aus dem Oberflächenprofil des Zigarettenkopfs nach der Schüttel-/Stoßbeaufschlagung können weitere Qualitätsmerkmale, beispielsweise das Kopfausfallvolumen, bestimmt werden, was ein Maß für die Widerstandsfähigkeit der Zigarette gegen Schüttel- und Stoßbewegungen darstellt.

Nach Abschluss der Messungen wird die Zigarette 50 nach unten geschwenkt und aus dem Greifer 31 freigegeben, so dass sie wie in Fig. 6 gezeigt durch eine in dem Gehäuse 11 zweckmäßigerweise vorgesehene Bodenöffnung in den darunter angeordneten Sammelbehälter 60 fallen kann.

Fig. 8 illustriert die Erfindung für eine alternative Messvorrichtung mit einem eindimensionalen Wegmesssensor, der zur Erzeugung eines Lichtstrahls 56 eingerichtet ist. In Fig. 8 ist der Lichtstrahl 56 im Querschnitt am Ort der zu untersuchenden Stirnfläche 51 durch ein schraffiertes Rechteck illustriert. Der Lichtstrahl 56 erzeugt auf der zu untersuchenden Stirnfläche 51 einen entsprechenden Lichtfleck oder Lichtpunkt 57. Um die zu untersuchende Stirnfläche 51 einschließlich der Kante 54 des Umhüllungsstreifens 55 vollständig zu überstreichen, ist es in dieser Ausführungsform erforderlich, die zu untersuchende Stirnfläche 51 des Produkts 50 in zwei zueinander senkrechten Abtastrichtungen 58, 59 relativ zu dem Lichtstrahl 56 zu bewegen. Der Manipulator 27 müsste daher beispielsweise zweiachsig ausgeführt sein. In Fig. 8 sind 100 Abtastpositionen gezeigt, wobei an jeder Abtastposition ein Messwert aufgezeichnet wird. In der Praxis ist die Zahl der Abtastpositionen pro Produkt je nach gewünschter Messauflösung in der Regel wesentlich höher.

Anhand der Figuren wurde lediglich die Messung an der Kopfseite von Zigaretten beschrieben. Die Messvorrichtung ist aber beispielsweise ebenfalls zur Messung an der Filterseite von Zigaretten, oder der Enden von Filterstöcken anwendbar, um Qualitätseigenschaften des filterseitigen Endes von Zigaretten oder von Filterstöcken zu bestimmen.

## Patentansprüche

1. Messvorrichtung (10) zur Bestimmung einer Messgröße an einem Ende eines stabförmigen Produkts (50) der Tabak verarbeitenden Industrie mittels eines optischen Sensors (13), der eine Strahlungsquelle (15, 17) zur Beleuchtung der Stirnseite (51) des stabförmigen Produkts (50) und einen Strahlungsdetektor (22) zum Detektieren von der Stirnseite (51) des stabförmigen Produkts (50) reflektierter Strahlung, Erzeugung eines Messsignals und Ausgabe des Messsignals an eine Signalverarbeitungseinrichtung (24) umfasst, **dadurch gekennzeichnet, dass** der Sensor (13) ein optischer Wegmesssensor ist, der zur Überstreichung der gesamten zu untersuchenden Stirnfläche (51) des stabförmigen Produkts (50) eingerichtet ist, so dass das von dem Sensor (13) ausgegebene Messsignal die Ermittlung eines quantitativen Oberflächenprofils der gesamten Stirnfläche (51) des stabförmigen Produkts (50) ermöglicht.

2. Messvorrichtung nach Anspruch 1, wobei die Signalverarbeitungseinrichtung (24) zur quantitativen Ermittlung eines von der abgetasteten Stirnseite (51) begrenzten Kopfausfallvolumens aus dem Messsignal eingerichtet ist.

3. Messvorrichtung nach einem der vorangehenden Ansprüche, **dadurch gekennzeichnet, dass** der Sensor (13) ein zweidimensionaler optischer Wegmesssensor ist, wobei die Strahlungsquelle (15, 17) zur Erzeugung eines Strahlungsfächers (18) eingerichtet ist, um eine linienförmige Abtastung (52) der Stirnfläche (51) des stabförmigen Produkts (50) durchzuführen, und wobei zur flächigen Abtastung der Stirnfläche (51) des stabförmige Produkts (50) der Wegmesssensor (13) und die Stirnseite (51) des stabförmigen Produkts (50) relativ zueinander bewegbar sind.

4. Messvorrichtung nach Anspruch 3, **dadurch gekennzeichnet, dass** die Ausdehnung b des Strahlungsfächers (18) am Ort der zu untersuchenden Stirnfläche (51) größer ist als der größte Durchmesser d der zu untersuchenden Stirnfläche (51).

5. Messvorrichtung nach einem der vorangehenden Ansprüche, **dadurch gekennzeichnet, dass** die Messvorrichtung einen Manipulator (27) zur Handhabung des stabförmigen Produkts (50) aufweist.

6. Messvorrichtung nach Anspruch 5, **dadurch gekennzeichnet, dass** der Manipulator (27) zur Bewegung des stabförmige Produkts (50) relativ zu dem Wegmesssensor (13) während der Messung eingerichtet ist.

7. Messvorrichtung nach Anspruch 5 oder 6, **dadurch gekennzeichnet, dass** der Manipulator (27) um eine insbesondere zu der Achse des stabförmigen Produkts (50) senkrechte Schwenkachse schwenkbar ist.

8. Messvorrichtung nach einem der Ansprüche 5 bis 8, **dadurch gekennzeichnet, dass** der Manipulator (27) zur Ausübung einer Schüttelbewegung auf das stabförmige Produkt (50) eingerichtet ist.

9. Messvorrichtung nach einem der Ansprüche 5 bis 9, **dadurch gekennzeichnet, dass** der Manipulator (27) zur Ausübung einer insbesondere axial gerichteten Stoßbewegung auf das stabförmige Produkt (50) eingerichtet ist.

10. Messvorrichtung nach einem der vorangehenden Ansprüche, **dadurch gekennzeichnet, dass** die Signalverarbeitungseinrichtung (24) zur Ermittlung einer geometrischen Eigenschaft eines Umhüllungsstreifens (54) des stabförmigen Produkts (50) aus dem Messsignal eingerichtet ist.

11. Messvorrichtung nach Anspruch 10, **dadurch gekennzeichnet, dass** die Signalverarbeitungseinrichtung zur Ermittlung mindestens einer aus der Gruppe der folgenden geometrischen Eigenschaften des Umhüllungsstreifens (54) aus dem Messsignal eingerichtet ist:
- mittlerer Durchmesser des Umhüllungsstreifens (54);
- Umfang des Umhüllungsstreifens (54);
- Exzentrizität des Umhüllungsstreifens.

12. Messvorrichtung nach einem der vorangehenden Ansprüche, **dadurch gekennzeichnet, dass** die Messvorrichtung (10) eine Lichtschranke (36) zur Erfassung von aus dem stabförmigem Produkt (50) ausfallendem Tabakmaterial (53) umfasst.

13. Messvorrichtung nach Anspruch 1, **dadurch gekennzeichnet, dass** der Sensor (13) ein eindimensionaler optischer Wegmesssensor ist, wobei die Strahlungsquelle (15) zur Erzeugung eines Lichtstrahls eingerichtet ist, um eine punktförmige Abtastung der Stirnfläche (51) des stabförmigen Produkts (50) durchzuführen, und wobei zur flächigen Abtastung der Stirnfläche (51) des stabförmige Produkts (50) der Wegmesssensor (13) und die Stirnseite (51) des stabförmigen Produkts (50) in zwei zueinander senkrechten Richtungen relativ zueinander bewegbar sind.

14. Messverfahren zur Bestimmung einer Messgröße an einem Ende eines stabförmigen Produkts der Tabak verarbeitenden Industrie, umfassend das Erzeugen eines Messsignals mittels eines optischen Sensors und Ausgeben des Messsignals an eine Signalverarbeitungseinrichtung zur Ermittlung der Messgröße aus dem Messsignal, **gekennzeichnet durch** die Verwendung eines optischen Wegmesssensors, der die gesamte zu untersuchende Stirnfläche des stabförmigen Produkts überstreicht und ein Messsignal ausgibt, das die Ermittlung eines quantitativen Oberflächenprofils der gesamten Stirnfläche des stabförmigen Produkts ermöglicht.

15. Messverfahren nach Anspruch 14, **dadurch gekennzeichnet, dass** eine erste Abtastung der Stirnfläche des stabförmigen Produkts durchgeführt wird, danach das stabförmige Produkt mit einer Schüttel- und/oder Stoßbewegung beaufschlagt wird, und danach eine zweite Abtastung der Stirnfläche des stabförmigen Produkts durchgeführt wird.
